# FASCICULE DE BREVET EUROPEEN

(11) **EP 1 381 799 B1**
(45) Date de publication et mention de la délivrance du brevet: **14.02.2007**
(21) Numéro de dépôt: 02726269.0
(22) Date de dépôt: 22.04.2002
(51) Int. Cl.: F16J 15/08

(54) **JOINT D'ETANCHEITE METALLIQUE ELASTIQUE FERME A PARTIES SAILLANTES DESAXEES**
GESCHLOSSENE METALLDICHTUNG MIT DEZENTRIERTEN VORSPRÜNGEN
CLOSED ELASTIC METAL GASKET WITH OFFSET PROJECTING PARTS

(30) Priorité: 23.04.2001 FR 0105428
(43) Date de publication de la demande: 21.01.2004
(73) Titulaire: COMMISSARIAT A L'ENERGIE ATOMIQUE, 75015 Paris (FR); Garlock France SAS, 42029 Saint Etienne Cédex (FR)
(72) Inventeur: ROUAUD, Christian, F-07700 Bourg Saint-Andeol (FR); CAPLAIN, Philippe, F-26130 Saint-Paul Trois Chateaux (FR)
(74) Mandataire: Poulin, Gérard
(86) Numéro de dépôt international: PCT/FR2002/001373
(87) Numéro de publication internationale: WO 2002/086358

(56) Documents cités:
- WO-A-00/57089
- FR-A- 2 636 115
- US-A- 5 797 604

## Description

### Domaine de l'invention

L'invention se rapporte au domaine de l'étanchéité statique, et en particulier au joint métallique élastique devant assurer une étanchéité à des forces de serrage inférieures à celles nécessaires à l'efficacité d'un joint dont l'âme est un ressort.

### Art antérieur et problème posé

Compte tenu du choix de leurs matériaux vis-à-vis de leur insensibilité aux fluides corrosifs, de leur bon comportement à haute et basse températures et de leur bonne tenue dans le temps, les joints d'étanchéité métallique sont utilisés dans des domaines d'application très divers, parmi lesquels on peut citer, de façon nullement limitative, les industries chimique, pétrolière et nucléaire, ainsi que les secteurs automobile et spatial. La qualité de l'étanchéité procurée par un joint d'étanchéité dépend notamment de la pression spécifique développée entre les surfaces de contact du joint et les brides de l'assemblage dans lequel le joint est placé. Au cours du serrage initial de l'assemblage, la pression spécifique doit être suffisante pour permettre l'adaptation du joint aux aspérités des surfaces des brides. Il est donc clair que la pression spécifique de serrage doit être relativement élevée, en tout cas supérieure à la pression du fluide régnant à l'intérieur du volume délimité par le joint et les surfaces des brides de serrage.

Un joint d'étanchéité pareil à celui qui est décrit dans le préambule de la revendication 1 est connu du document US-A 3 188 100.

Par ailleurs, dans de nombreuses applications, l'effort de serrage doit rester faible. Ceci est notamment le cas lorsque l'assemblage est peu accessible et rend difficile la manipulation des outils de serrage, comme dans l'industrie nucléaire et l'industrie du semi-conducteur et lorsque les assemblages en matériau à hautes caractéristiques doivent être allégés et ne supportent pas des efforts élevés, comme dans les industries aéronautique et spatiale. Pour obtenir un tel résultat, on a mis au point des joints toriques métalliques utilisant comme élément élastique un tube ouvert, de préférence enveloppé d'une fine couche de matériau ductile. Chaque surface de contact possède une partie saillante dans l'axe de la section du joint torique normale aux surfaces des brides de serrage. Ceci permet de diminuer d'un facteur 2 les efforts de serrage sur ce type de joint. Par contre, pour ce type de joint, il est difficile de maîtriser les points exacts de contact en fonctionnement, c'est-à-dire une fois que le joint est écrasé. En effet, lors de l'écrasement du joint, la déformation de celui-ci ne permet pas de localiser précisément ces points de contact qui se déplacent perpendiculairement à la direction d'écrasement.

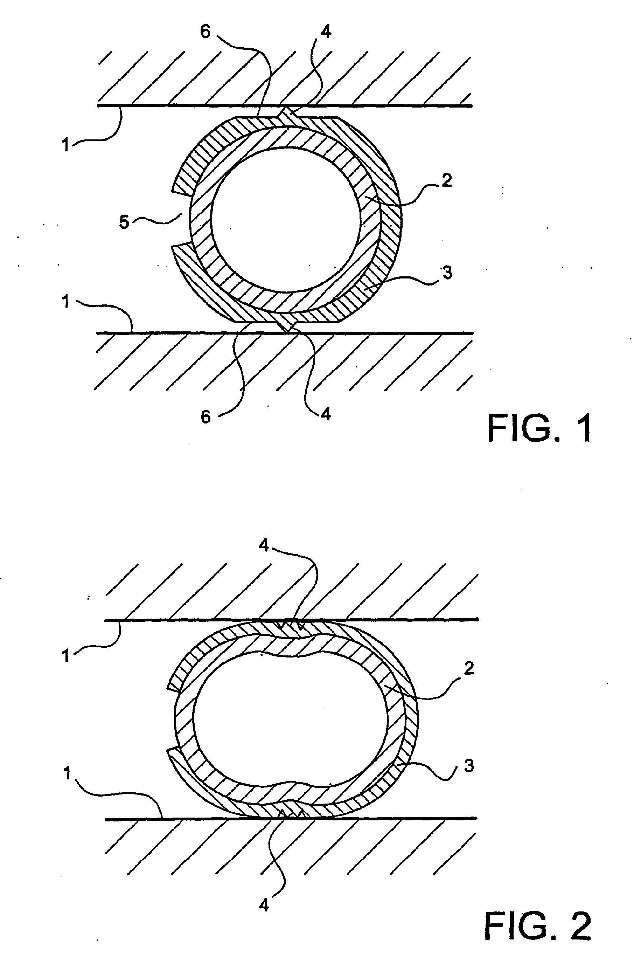

D'autre part, par le brevet français numéro 2 636 115, on connaît un joint d'étanchéité métallique à pression spécifique très élevée et dont la structure est fermée. La figure 1 montre la section d'un tel joint. Ce dernier permet d'obtenir une étanchéité avec un faible effort de serrage, tout en pouvant résister à des températures et des pressions élevées. Il comprend une âme métallique 2 qui est élastique et de section circulaire et fermée. Une enveloppe extérieure 3 en métal relativement ductile l'entoure. Elle peut être fermée ou posséder une ouverture latérale 5.

Ce joint est placé entre deux pièces 1 qui délimitent des espaces qu'il faut étancher l'un par rapport à l'autre. Pour obtenir une étanchéité avec un faible serrage, on voit, sur deux surfaces de dégagement 6, opposées l'une par rapport à l'autre et placée en regard chacune d'une pièce 1, une partie saillante 4, de section approximativement triangulaire et placée sur toute la longueur du joint.

Par contre, comme le montre la figure 2, après application de l'effort de serrage, les parties saillantes 4 sont, bien entendu, écrasées partiellement, mais la pression qu'elles communiquent à l'enveloppe externe 3 et l'âme métallique 2 fait que ces dernières se déforment. Le joint a donc tendance à prendre une forme de huit et à perdre toutes les caractéristiques mécaniques dues à une forme tubulaire cylindrique. En particulier, on constate que la déformation en huit du joint provoque une modification de la zone de contact de celui-ci sur les pièces 1 entre lesquelles il est serré. La modélisation confirme que la pression spécifique développée en début d'écrasement, au droit des parties saillantes 4, diminue au fur et à mesure que l'écrasement augmente, pour se répartir sur deux zones adjacentes et symétriques de la surface de dégagement 6, de part et d'autre de la partie saillante.

Le but de l'invention est donc de pallier à cet inconvénient en proposant un type de joint métallique différent.

### Résumé de l'invention

L'objet principal de l'invention est donc un joint d'étanchéité métallique élastique fermé comprenant une âme métallique élastique et une enveloppe externe, en matériau ductile, dans laquelle est encastrée l'âme métallique. Le joint présente, lorsqu'il est au repos, une section de forme circulaire fermée définissant un axe médian, c'est-à-dire une droite passant par le centre géométrique de la section du joint au repos. Celui-ci possède deux surfaces de dégagement qui sont opposées et qui possèdent chacune une partie saillante dont le sommet est destiné à venir en contact étanche avec un objet, sous l'effet d'un effort de serrage déterminé.

Selon l'invention, au repos, les parties saillantes sont légèrement décalées de part et d'autre de l'axe médian du joint et les deux surfaces de dégagement sont parallèles entre elles et perpendiculaires chacune à l'axe de symétrie de la partie saillante qui leur est associée.

Dans un grand nombre de réalisations du joint selon l'invention, celui-ci est de forme générale annulaire. Dans ce cas, l'ouverture peut être positionnée vers l'axe de symétrie du joint ou à l'opposé de celui-ci.

Le joint peut également être de différentes formes, par exemple de forme elliptique, de forme triangulaire ou de forme rectangulaire.

Les parties saillantes peuvent être de plusieurs formes, par exemple de forme généralement triangulaire, de forme généralement trapézoïdale, de forme généralement elliptique, ou de forme généralement rectangulaire.

De préférence, la hauteur des parties saillantes, de section approximativement triangulaire, est comprise entre 0,25 et 0,50 mm.

Une variante particulièrement intéressante consiste à utiliser sur chaque surface de dégagement deux parties saillantes placées de part et d'autre de l'axe médian.

### Liste des figures

L'invention et ses différentes caractéristiques techniques seront mieux appréciées à la lecture de la description suivante, accompagnée de plusieurs figures représentant respectivement :
- figure 1, déjà décrite, en coupe, la section d'un joint métallique élastique selon l'art antérieur ;
- figure 2, déjà décrite, en coupe, la section du même joint de l'art antérieur, représenté à la figure 1, mais après écrasement ;
- figure 3, en coupe, la section d'un joint métallique élastique selon une première réalisation de l'invention, avant écrasement ;
- figure 4, en coupe, la section du même joint selon l'invention décrit à la figure 3, mais après écrasement ;
- figure 5, deux courbes caractéristiques de ce joint métallique élastique selon l'invention ;
- figure 6, en coupe, la section d'un joint métallique élastique selon l'invention, dans une deuxième réalisation ;
- figures 7 et 8, des courbes caractéristiques du fonctionnement des joints métalliques selon l'invention ;
- figures 9 à 12, différentes formes que peut avoir le joint ; et
- figures 13 à 16, différentes formes que peuvent avoir les parties saillantes.

### Description détaillée de deux réalisations de l'invention

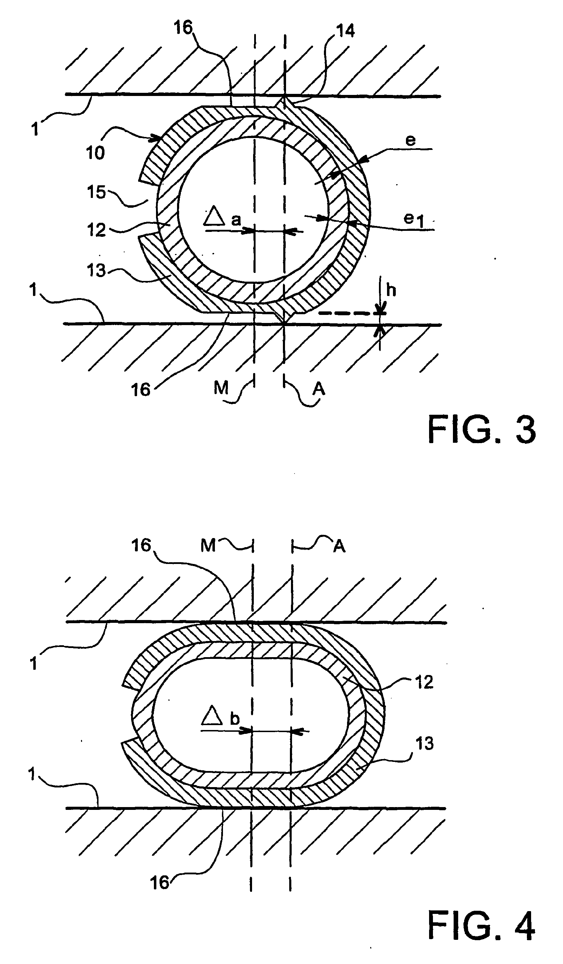

La figure 3 représente, avant son écrasement, un joint métallique élastique selon l'invention, dans une première réalisation. Comparativement à la figure 1, on retrouve les deux même pièces 1 qui vont écraser le joint 10. Celui-ci comporte de manière analogue une âme métallique 12 entourée de l'enveloppe externe 13. L'âme métallique 12 est réalisée le plus souvent en acier inoxydable écroui, mais peut également être réalisée en alliage de nickel ou de titane. L'enveloppe externe 13 peut être constituée avec des matériaux très ductiles, tel que l'aluminium, l'or ou le cuivre, ou moins ductiles, tels que le nickel ou l'acier inoxydable ou des matériaux de ductilité équivalente.

Les surfaces de dégagement 16 sont ménagées de façon parallèle entre elles. Aux endroits de la surface de l'enveloppe externe 13 qui doivent rentrer en contact avec les pièces 1, se trouve toujours une partie saillante 14. Comme le schématise la position des deux axes, l'axe médian M du joint 10 et un axe A passant par les sommets des deux parties saillantes 14, ces deux dernières sont décalées par rapport à l'axe médian M. En d'autres termes, sur chacune des surfaces de dégagement 16 se trouve une partie saillante 14 décalée par rapport au centre de cette même partie de dégagement 16. On note que les deux parties saillantes 14 sont décalées du même côté. A cette occasion, on précise que la présence de l'ouverture 15 dans l'enveloppe externe 16 n'est pas obligatoire, et peut être placée de n'importe quel côté du joint 10. En effet, la déformation de la section tubulaire du joint offre une symétrie pendant la phase de l'écrasement, du fait de la symétrie du joint.

La hauteur h des parties saillantes 14 est fonction de l'épaisseur e13 de l'enveloppe externe 13. Pour des valeurs de l'épaisseur e13 de l'enveloppe 13 comprises entre 0,25 mm et 1 mm, la hauteur h des parties saillantes 14 est de l'ordre de 10 à 50 % de l'épaisseur e13.

Le désaxage Δa entre l'axe médian M et l'axe A des parties saillantes 14 est obtenu par une modélisation de la pression de contact. Sa valeur est fonction du diamètre extérieur du tube constituant l'âme métallique 12, de l'épaisseur e12 de l'âme métallique 12 et du taux d'écrasement souhaité. Pour un taux d'écrasement habituel de l'ordre de 10 %, le décalage Δa varie entre 0,15 et 0,30 mm pour des diamètres d'un tube métallique de 3 à 4 mm.

La figure 4 montre, après l'écrasement qui se produit de façon symétrique, le décalage Δb entre l'axe médian M et l'axe A des parties saillantes 14 est supérieur au décalage Δa de ces deux axes avant l'écrasement. On constate également que les surfaces de dégagement 16 ont tendance à rentrer en contact sur une assez grande partie avec les pièces de contact 1. Ceci apparaît pour une grande ductilité de l'enveloppe externe 13.

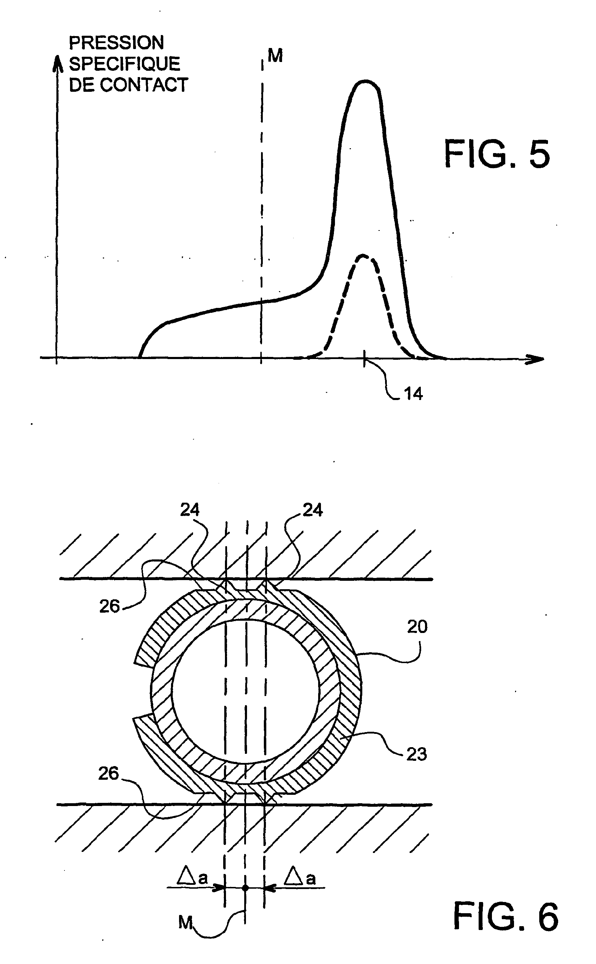

La figure 5 montre, en superposition, la répartition de la pression de contact sur la surface 16 pour un écrasement de 0,30 mm (courbe en traits interrompus) et pour un écrasement de 1 mm (courbe en trait fort). On constate que la pression de contact est, bien entendu, maximal à l'endroit de la partie saillante 14.

La figure 6 montre une deuxième réalisation du joint métallique selon l'invention.

Comme on peut le constater, la principale nouveauté de ce deuxième joint métallique 20 est la présence, sur chacune des surfaces de dégagement 26 de l'enveloppe externe 23 de deux parties saillantes 24. Elles sont placées de part et d'autre de l'axe médian M du joint métallique 20. Elles permettent donc de pouvoir supporter des forces d'écrasement un peu plus importantes et de façon symétrique. En outre, la présence de deux parties saillantes 24 séparées d'un petit espace peut jouer le rôle de deux barrières d'étanchéité.

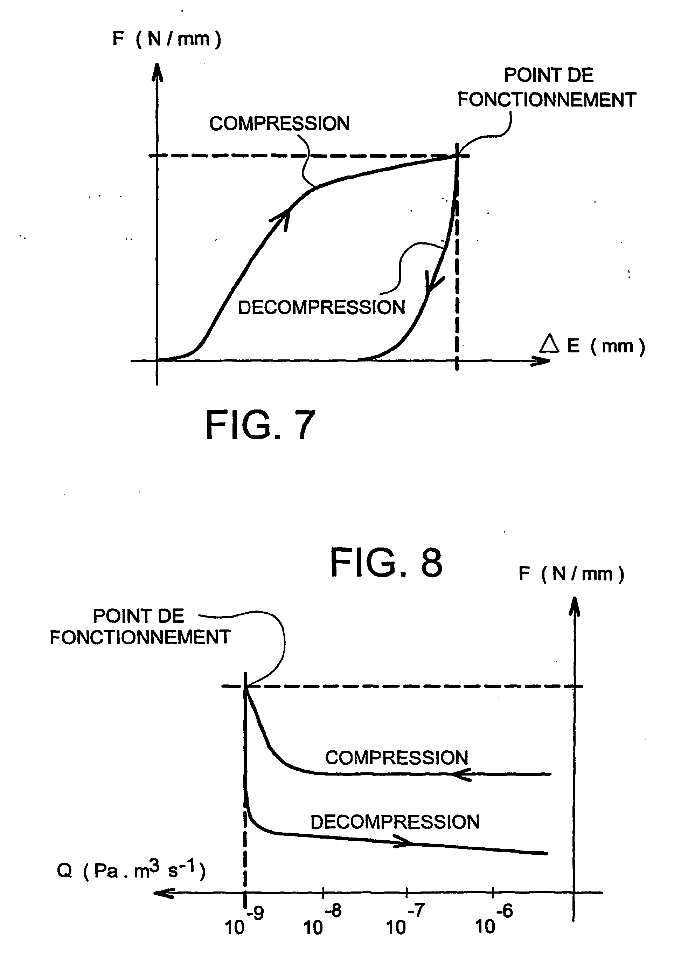

La figure 7 montre une courbe d'écrasement du joint selon l'invention. Cette courbe est représentative de la relation entre l'effort linéique de serrage F, en fonction de l'écrasement ΔE du joint.

La figure 8 montre la valeur de fuite Q, en fonction de l'effort linéique F.

Sur ces deux courbes, il faut tenir compte de l'orientation des flèches qui indiquent le sens de déroulement du processus de serrage et de desserrage du joint.

Dans un grand nombre de réalisations du joint selon l'invention, celui-ci est de forme générale annulaire.

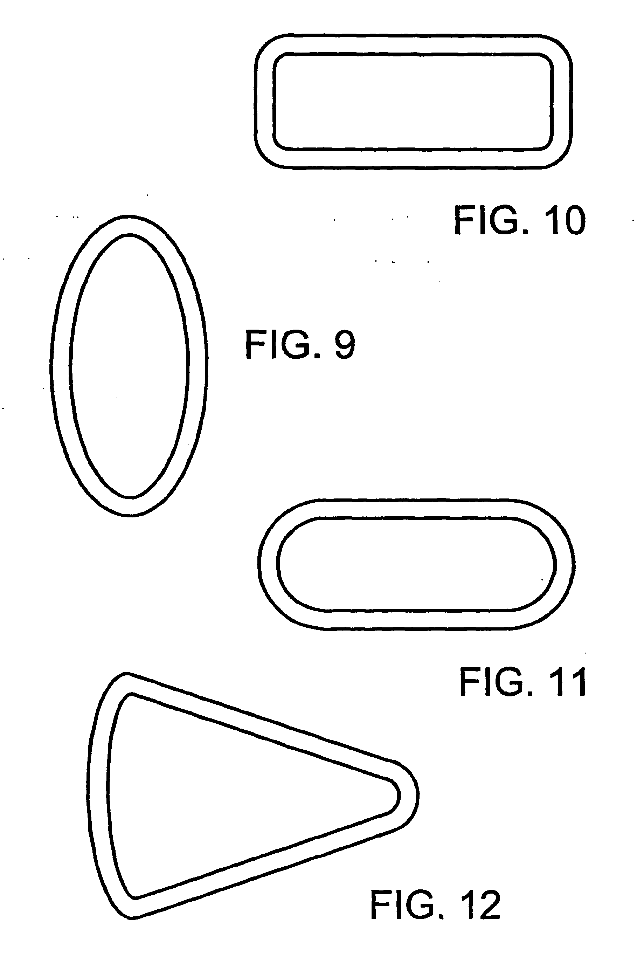

Dans d'autres réalisations du joint selon l'invention, celui-ci peut être elliptique (figure 9), rectangulaire, généralement rectangulaire avec des coins arrondis (figure 10), triangulaire, oblongue (figure 11) ou d'une des autres formes résultant d'une combinaison et/ou d'une modification de ces formes (figure 12).

Dans le cas représenté, la hauteur des parties saillantes, de section approximativement triangulaire, est comprise entre 0,25 et 0,50 mm.

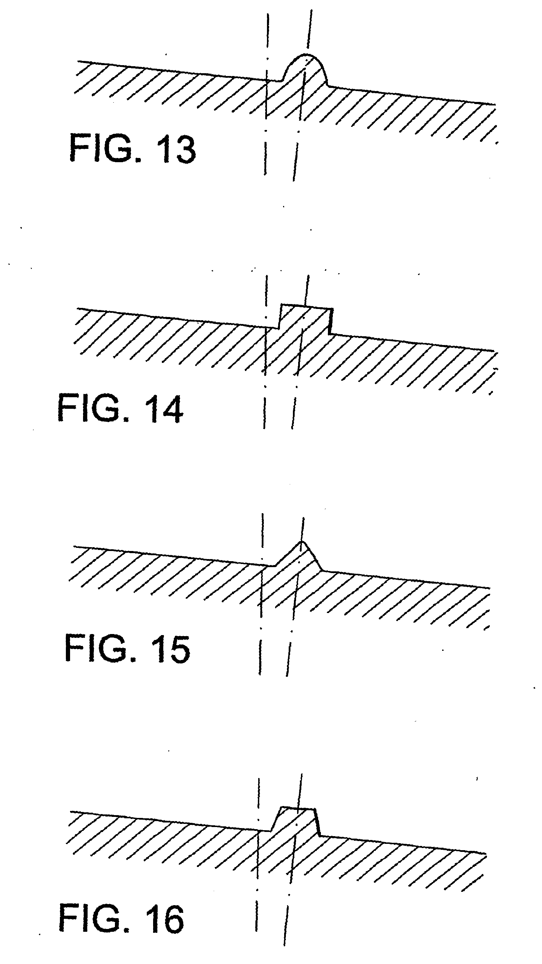

Pour une section approximativement triangulaire, la hauteur est mesurée perpendiculairement à la surface 16, à partir du sommet de la partie saillante jusqu'à ladite surface. Dans d'autres réalisations du joint selon l'invention, la partie saillante peut être elliptique (figure 13), rectangulaire, généralement rectangulaire avec des coins arrondis (figure 14), triangulaire (figure 15), trapézoïdale (figure 16), ou d'une des autres formes. Pour une section approximativement trapézoïdale, arrondie ou d'une autre forme, la hauteur est mesurée perpendiculairement à la surface 16, à partir du sommet de la partie saillante jusqu'à ladite surface.

## Revendications

1. Joint d'étanchéité métallique élastique fermé (10, 20) comprenant une âme métallique élastique et une enveloppe externe (13, 23) en matériau ductile, dans laquelle est encastrée l'âme métallique (12, 22), le joint (10) présentant, lorsqu'il est en repos, une section de forme circulaire fermée définissant un axe médian (M), c'est-à-dire une droite passant par le centre géométrique de la section du joint au repos, celui-ci possédant deux surfaces de dégagement (16, 26) qui sont opposées et qui possèdent chacune au moins une partie saillante (14, 24) et dont le sommet est destiné à venir en contact étanche avec un objet (1), sous l'effet d'un effort de serrage déterminé, les deux surfaces de dégagement (16, 26) étant parallèles entre elles et chacune perpendiculaire à l'axe de symétrie de la partie saillante (14, 24) qui leur est associée,
**caractérisé en ce que**, au repos, les parties saillantes (14, 24) sont légèrement décalées par rapport à l'axe médian (M) du joint (10, 20).

2. Joint selon la revendication 1, **caractérisé en ce que** la hauteur (h) des parties saillantes (14, 24) est comprise entre 0,025 mm et 0,50 mm.

3. Joint selon la revendication 1, **caractérisé en ce qu'**il possède sur chaque surface de dégagement (26), deux parties saillantes (24) placées de part et d'autre de l'axe médian (M).

4. Joint selon la revendication 1, **caractérisé en ce que** les parties saillantes (14, 24) sont de forme généralement triangulaire.

5. Joint selon la revendication 1, **caractérisé en ce que** les parties saillantes sont de forme généralement trapézoïdale.

6. Joint selon la revendication 1, **caractérisé en ce que** les parties saillantes sont de forme généralement elliptique.

7. Joint selon la revendication 1, **caractérisé en ce que** les parties saillantes sont de forme généralement rectangulaire.

8. Joint selon la revendication 1, **caractérisé en ce qu'**il est de forme générale annulaire.

9. Joint selon la revendication 8, **caractérisé en ce qu'**il est de forme elliptique.

10. Joint selon la revendication 8, **caractérisé en ce qu'**il est de forme triangulaire.

11. Joint selon la revendication 8, **caractérisé en ce qu'**il est de forme rectangulaire.

## Claims

1. An elastic metal closed gasket (10, 20) having an elastic metal core and an outer envelope (13, 23) of ductile material, into which is inserted the metal core (12, 22), while the gasket (10), when idle, has a closed circular section defining a middle axis (M), i.e. a straight line passing through the geometrical centre of the idle gasket section which has two clearance surfaces (16, 26) placed opposite each other and each of which has at least one projecting part (14, 24) and whose apex is designed to come into tight contact with an object (1) under the effect of a determined tightening force, the two clearance surfaces (16, 26) being parallel to one another and each parallel to the axis of symmetry of the projecting part (14, 24) associated with them, **characterized by** the fact that, when idle, the projecting parts (14, 24) are offset slightly with respect to middle axis (M) of the gasket (10, 20).

2. A gasket according to claim 1, **characterized by** the fact that the height (h) of the projecting parts (14, 24) is included between 0.025 mm and 0.50 mm.

3. A gasket according to claim 1, **characterized by** the fact that on each clearance surface (26) it has two projecting parts (24) placed either side of middle axis (M).

4. A gasket according to claim 1, **characterized by** the fact that the projecting parts (14, 24) are generally triangular in shape.

5. A gasket according to claim 1, **characterized by** the fact that the projecting parts are generally trapezoidal in shape.

6. A gasket according to claim 1, **characterized by** the fact that the projecting parts are generally elliptical in shape.

7. A gasket according to claim 1, **characterized by** the fact that the projecting parts are generally rectangular in shape.

8. A gasket according to claim 1, **characterized by** the fact that it is generally annular in shape.

9. A gasket according to claim 8, **characterized by** the fact that it is generally elliptical in shape.

10. A gasket according to claim 8, **characterized by** the fact that it is generally triangular in shape.

11. A gasket according to claim 8, **characterized by** the fact that it is generally rectangular in shape.

## Patentansprüche

1. Geschlossene elastische Metalldichtung (10, 20) mit einem elastischen Metallkern und einer metallischen Außenhülle (13, 23) aus einem duktilen Material, in die der Metallkern (12, 22) eingefügt ist, wobei die Dichtung (10), wenn sie sich im Ruhezustand befindet, einen geschlossenen kreisförmigen Querschnitt aufweist, der eine Mittelachse (M) definiert, das heißt eine Gerade, die durch den geometrischen Mittelpunkt des Querschnitts der Dichtung im Ruhezustand verläuft, wobei diese zwei entgegengesetzte Freiflächen (16, 26) besitzt, von denen jede einen hervorstehenden Teil (14, 24) aufweist, dessen Spitze dazu bestimmt ist, unter der Wirkung einer bestimmten Spannkraft einen dichten Kontakt mit einem Gegenstand (1) herzustellen, wobei die beiden Freiflächen (16, 26) parallel zueinander sind und jede senkrecht zu der Symmetrieachse des zu ihr gehörenden hervorstehenden Teils (14, 24) ist,
**dadurch gekennzeichnet, dass** im Ruhezustand die hervorstehenden Teile (14, 24) leicht versetzt sind in Bezug auf die Mittelachse (M) der Dichtung (10, 20).

2. Dichtung nach Anspruch 1, **dadurch gekennzeichnet, dass** die Höhe (h) der hervorstehenden Teile (14, 24) zwischen 0,025 mm und 0,50 mm enthalten ist.

3. Dichtung nach Anspruch 1, **dadurch gekennzeichnet, dass** sie auf jeder Freifläche (26) zwei hervorstehende Teile (24) besitzt, die sich beiderseits einer Mittelachse (M) befinden.

4. Dichtung nach Anspruch 1, **dadurch gekennzeichnet, dass** die hervorstehenden Teile (14, 24) von generell dreieckiger Form sind.

5. Dichtung nach Anspruch 1, **dadurch gekennzeichnet, dass** die hervorstehenden Teile generell trapezförmig sind.

6. Dichtung nach Anspruch 1, **dadurch gekennzeichnet, dass** die hervorstehenden Teile von generell elliptischer Form sind.

7. Dichtung nach Anspruch 1, **dadurch gekennzeichnet, dass** die hervorstehenden Teile von generell rechteckiger Form sind.

8. Dichtung nach Anspruch 1, **dadurch gekennzeichnet, dass** sie generell kreisförmig ist.

9. Dichtung nach Anspruch 8, **dadurch gekennzeichnet, dass** sie von elliptischer Form ist.

10. Dichtung nach Anspruch 8, **dadurch gekennzeichnet, dass** sie von dreieckiger Form ist.

11. Dichtung nach Anspruch 12, **dadurch gekennzeichnet, dass** sie von rechteckiger Form ist.
